# EUROPEAN PATENT APPLICATION

(11) **EP 4 675 822 A1**
(43) Date of publication of application: **07.01.2026**
(21) Application number: 24763438.9
(22) Date of filing: 24.01.2024
(51) Int. Cl.: H01M 50/451, H01M 50/414, H01M 50/42, H01M 50/423, H01M 50/426, H01M 50/434, H01M 50/443, H01M 50/446, H01M 50/457, H01M 50/46, H01M 50/489

(54) **SEPARATOR FOR NONAQUEOUS SECONDARY BATTERY, AND NONAQUEOUS SECONDARY BATTERY**

(30) Priority: 27.02.2023 JP 2023028672
(71) Applicant: Teijin Limited, Osaka-shi, Osaka 530-0005 (JP)
(72) Inventor: KOGANEMARU, Ai, Osaka-shi, Osaka 530-0005 (JP); NISHIKAWA, Satoshi, Osaka-shi, Osaka 530-0005 (JP)
(74) Representative: Berggren Oy
(86) International application number: PCT/JP2024/002024
(87) International publication number: WO 2024/180953

(57) **Abstract**

The separator for a non-aqueous secondary battery has a porous layer containing inorganic particles and a binder resin and an adhesive layer which contains a phenyl group-containing acrylic type resin and a butadiene-acrylonitrile type resin and in which the amount of the butadiene unit in the total amount of the acrylic type unit, the styrene type unit, the butadiene unit, and the acrylonitrile unit contained in both resins is 3 mol% to 50 mol%.

## Description

### Technical Field

The present disclosure relates to a separator for a non-aqueous secondary battery and a non-aqueous secondary battery.

### Background Art

PTL 1 discloses an adhesive for bonding members constituting a lithium ion secondary battery which contains a particulate polymer having a core-shell structure.

PTL 2 and PTL 3 disclose a separator for a non-aqueous secondary battery having an adhesive layer which is provided on one side or both sides of a laminated body of a porous substrate and a porous layer and in which adhesive resin particles adhere to the laminated body.

### Citation List

### Patent Literature

PTL 1: WO2015/005145
PTL 2: WO2019/130994
PTL 3: WO2020/246497

### Summary of Invention

### Technical Problem

From the viewpoint of preventing a short circuit of a battery, the separator is required to have adhesiveness to the electrodes.

In order to bond the separator to the electrodes more strongly, a separator impregnated with an electrolyte solution is stacked on the electrodes and hot pressed (referred to as "wet heat press") when a battery is produced.

When the size of the battery is increased, the size of the hot press device for wet heat press becomes large, and thus it is desired to develop a separator having excellent adhesion to the electrodes even by wet heat press having a relatively low temperature and a low pressure.

The present disclosure has been made under the above circumstances.

A problem of the present disclosure is to provide a separator for a non-aqueous secondary battery having excellent adhesion to an electrode by low-temperature and low-pressure wet heat press.

### Solution to Problem

Specific solutions to the problem include the following embodiments.
<1> A separator for a non-aqueous secondary battery, having:
   a porous layer containing inorganic particles and a binder resin; and
   an adhesive layer containing a phenyl group-containing acrylic type resin and a butadiene-acrylonitrile type resin in which the amount of the butadiene unit in the total amount of the acrylic type unit, the styrene type unit, the butadiene unit, and the acrylonitrile unit contained in both resins is 3 mol% to 50 mol%.
<2> The separator for a non-aqueous secondary battery according to <1> further having
   a porous substrate
   in which the porous layer is provided on one side or both sides of the porous substrate and
   the adhesive layer is provided on one side or both sides of a laminated body of the porous substrate and the porous layer.
<3> The separator for a non-aqueous secondary battery according to <1> or <2>
   in which the adhesive layer contains resin particles and
   the resin particles contain at least one of a phenyl group-containing acrylic type resin and a butadiene-acrylonitrile type resin.
<4> The separator for a non-aqueous secondary battery according to <3> in which the average primary particle diameter of the entire resin particles contained in the adhesive layer is 0.1 µm to 1.0 µm.
<5> The separator for a non-aqueous secondary battery according to any one of <1> to <4> in which the mass ratio of the phenyl group-containing acrylic type resin to the butadiene-acrylonitrile type resin contained in the adhesive layer is 60:40 to 95:5.
<6> The separator for a non-aqueous secondary battery according to any one of <1> to <5>
   in which the phenyl group-containing acrylic type resin has a styrene type unit and an acrylic type unit and
   the molar ratio of the styrene type unit to the acrylic type unit is 30:70 to 50:50.
<7> The separator for a non-aqueous secondary battery according to any one of <1> to <6> in which the glass transition temperature of the entire resin contained in the adhesive layer is 58°C to 100°C.
<8> The separator for a non-aqueous secondary battery according to any one of <1> to <7> in which the basis weight of the adhesive layer is 0.05 g/m² to 1.0 g/m² per one side of the separator for a non-aqueous secondary battery.
<9> The separator for a non-aqueous secondary battery according to any one of <1> to <8> in which the average primary particle diameter of the entire inorganic particles contained in the porous layer is 0.01 µm to 1.0 µm.
<10> The separator for a non-aqueous secondary battery according to any one of <1> to <9> in which the binder resin contains at least one selected from the group consisting of a polyamide type resin, an acrylic type resin, a fluorine type resin, and a styrene-butadiene type resin.
<11> A non-aqueous secondary battery that obtains electromotive force by doping and dedoping of lithium ions, having:
   a positive electrode; a negative electrode; and the separator for a non-aqueous secondary battery according to any one of <1> to <10> disposed between the positive electrode and the negative electrode.

### Advantageous Effects of Invention

According to the present disclosure, a separator for a non-aqueous secondary battery having excellent adhesion to an electrode by low-temperature and low-pressure wet heat press is provided.

### Brief Description of Drawings

[FIG. 1] A schematic cross-sectional view of an example of the separator of the present disclosure.
[FIG. 2] A schematic cross-sectional view of an example of the separator of the present disclosure.
[FIG. 3] A schematic cross-sectional view of an example of the separator of the present disclosure.
[FIG. 4] A schematic cross-sectional view of an example of the separator of the present disclosure.
[FIG. 5] A schematic cross-sectional view of an example of the separator of the present disclosure.
[FIG. 6] A schematic cross-sectional view of an example of the separator of the present disclosure.
[FIG. 7] A schematic cross-sectional view of an example of the separator of the present disclosure.

### Description of Embodiments

Hereinafter, embodiments of the present disclosure will be explained. The explanation and the Examples illustrate the embodiments but do not limit the scope of the embodiments.

In the present disclosure, a numerical range denoted using "to" represents the range inclusive of the numerical values written before and after "to" as the minimum value and the maximum value.

Regarding stepwise numerical ranges designated in the present disclosure, an upper or lower limit set forth in a numerical range may be replaced by an upper or lower limit of another stepwise numerical range described. Besides, an upper or lower limit set forth in a numerical range of the numerical ranges designated in the present disclosure may be replaced by a value indicated in the Examples.

In the present disclosure, the term "step" includes not only an independent step but also a step which is not clearly distinguished from other steps but achieves the purpose thereof.

In the present disclosure, when the amount of each component in a composition is referred to and when a plurality of types of substances corresponding to a component are present in the composition, the amount means the total amount of the plurality of types of substances present in the composition unless otherwise specified.

In the present disclosure, a plurality of types of particles corresponding to each component may be included. When a plurality of types of particles corresponding to a component are present in a composition, the particle diameter of the component means the value of the mixture of the plurality of types of particles present in the composition unless otherwise specified.

In the present disclosure, MD (Machine Direction) means the longitudinal direction of the separator produced in a long shape, and TD (Transverse Direction) means a direction orthogonal to MD in the surface direction of the separator. In the present disclosure, TD is also referred to as "width direction".

In the present disclosure, when the stacking relationship of the layers constituting the separator is expressed by "upper" and "lower", the layer closer to the porous substrate is referred to as "lower", and the layer farther from the porous substrate is referred to as "upper".

In the present disclosure, the volume of the porous layer excluding the pores is referred to as the "solid content volume".

In the present disclosure, performing heat press treatment after impregnating the separator with an electrolyte solution is referred to as "wet heat press", and performing heat press treatment without impregnating the separator with an electrolyte solution is referred to as "dry heat press".

In the present disclosure, the expression "(meth)acryl" means that the term may be either "acryl" or "methacryl".

In the present disclosure, a "monomer unit" of a polymer or a resin means a constituent unit of the polymer or the resin which is obtained by polymerizing a monomer.

In the present disclosure, a constituent unit obtained by polymerizing an acrylic type monomer is referred to as an "acrylic type unit", a constituent unit obtained by polymerizing a styrene type monomer is referred to as a "styrene type unit", a constituent unit obtained by polymerizing butadiene is referred to as a "butadiene unit", and a constituent unit obtained by polymerizing acrylonitrile is referred to as an "acrylonitrile unit".

### <Separator for Non-Aqueous Secondary Battery>

The separator for a non-aqueous secondary battery of the present disclosure (also simply referred to as "separator" in the present disclosure) has a porous layer containing inorganic particles and a binder resin and an adhesive layer which contains a phenyl group-containing acrylic type resin and a butadiene-acrylonitrile type resin and in which the amount of the butadiene unit in the total amount of the acrylic type unit, the styrene type unit, the butadiene unit, and the acrylonitrile unit contained in both resins is 3 mol% to 50 mol%.

Regarding the phenyl group-containing acrylic type resin and the butadiene-acrylonitrile type resin, the two types of resins may be contained in the adhesive layer as separate molecules, or the two types of resins which are connected to each other may be contained in the adhesive layer.

The separator of the present disclosure has an adhesive layer which contains a phenyl group-containing acrylic type resin and a butadiene-acrylonitrile type resin and in which the amount of the butadiene unit in the total amount of the acrylic type unit, the styrene type unit, the butadiene unit, and the acrylonitrile unit contained in both resins is 3 mol% to 50 mol%, and thus the separator has excellent adhesion to an electrode by low-temperature and low-pressure wet heat press. The mechanism thereof is presumed as follows.

The phenyl group-containing acrylic type resin is a resin that adheres easily to an electrode by heat application. On the other hand, the butadiene-acrylonitrile type resin is a resin having excellent affinity with the electrolyte solution. In addition, it is presumed that, because the amount of the butadiene unit in the total amount of the acrylic type unit, the styrene type unit, the butadiene unit, and the acrylonitrile unit contained in both resins is 3 mol% to 50 mol%, both resins can be mixed without being separated. Since both resins are mixed and contained in the adhesive layer, it is presumed that the adhesive layer adheres well to the electrode even by low-temperature and low-pressure wet heat press.

When the amount of the butadiene unit in the total amount of the acrylic type unit, the styrene type unit, the butadiene unit, and the acrylonitrile unit contained in the phenyl group-containing acrylic type resin and the butadiene-acrylonitrile type resin is less than 3 mol%, the affinity of the adhesive layer to the electrolyte solution is low. From the viewpoint of sufficiently impregnating the adhesive layer with the electrolyte solution, the amount of the butadiene unit is 3 mol% or more, preferably 3.2 mol% or more, and more preferably 3.5 mol% or more.

When the amount of the butadiene unit in the total amount of the acrylic type unit, the styrene type unit, the butadiene unit, and the acrylonitrile unit contained in the phenyl group-containing acrylic type resin and the butadiene-acrylonitrile type resin is more than 50 mol%, the phenyl group-containing acrylic type resin and the butadiene-acrylonitrile type resin are less likely to be mixed with each other. From the viewpoint of mixing both resins well, the amount of the butadiene unit is 50 mol% or less, preferably 40 mol% or less, and more preferably 30 mol% or less.

The types and the molar ratios of the monomer units contained in the phenyl group-containing acrylic type resin and the butadiene-acrylonitrile type resin are specified by nuclear magnetic resonance (NMR). Specifically, the following measurement is made.

The adhesive layer peeled off from the separator or the resin material used for forming the adhesive layer is used as the sample. When the resin material used for forming the adhesive layer is a resin particle dispersion, the resin particle dispersion is air-dried to obtain the sample.

After swelling the sample with deuterated chloroform, using an NMR apparatus (JNM-ECA600 manufactured by JEOL Ltd.) and a semi-solid probe (FGMAS probe manufactured by JEOL Ltd.), at room temperature, a ¹H-NMR spectrum (a MAS rotation speed of 6 kHz, an observation width of 15 ppm, a point number of 32 k , and pulse repetition waiting time of four seconds) is measured at 600 MHz , and a ¹³C-NMR spectrum is measured at 150 MHz. The ¹³C-NMR spectrum is accumulated approximately 33000 times in a quantitative mode (a decoupling method with an inverse gate, a MAS rotation speed of 6 kHz, an observation width of 250 ppm, a point number of 32 k, and pulse repetition waiting time of 12 seconds).

In the above measurement, it does not matter whether the acrylic type unit, the styrene type unit, the butadiene unit, and the acrylonitrile unit are contained in the phenyl group-containing acrylic type resin or in the butadiene-acrylonitrile type resin. For example, when the butadiene-acrylonitrile type resin has a styrene type unit, the styrene type unit is also quantified.

In the above measurement, the acrylonitrile unit is not included in the acrylic type unit. That is, the acrylonitrile unit is not quantitatively determined also as an acrylic type unit.

In the above measurement, a styrene type unit may not be detected. For example, when the phenyl group-containing acrylic type resin is a resin that has a phenyl (meth)acrylate unit and that does not have any styrene type unit and when the butadiene-acrylonitrile type resin is a resin that does not have any styrene type unit, no styrene type unit is detected.

The separator of the present disclosure may be in the form of having only the porous layer and the adhesive layer or in the form of further having a porous substrate. From the viewpoint of increasing the mechanical strength of the separator, the viewpoint of imparting shutdown function to the separator, or another viewpoint, the separator of the present disclosure preferably has a porous substrate. The porous substrate is a sheet that does not contain any inorganic particles and is distinguished from the porous layer in that the porous substrate does not contain any inorganic particles.

When the separator of the present disclosure has a porous substrate, the separator has the porous layer on one side or both sides of the porous substrate and has the adhesive layer on one side or both sides of a laminated body of the porous substrate and the porous layer.

In the separator of the present disclosure, the adhesive layer is preferably an adhesive layer containing resin particles from the viewpoint of ion permeability. The resin particles may adhere to the porous layer or the porous substrate by adhesion of the resin particles or may be contained in the adhesive layer together with a binder resin. That is, the adhesive layer may be an adhesive layer formed by adhesion of resin particles to the porous layer or the porous substrate or may be an adhesive layer containing resin particles and a binder resin.

When the adhesive layer contains resin particles, the resin particles preferably contain at least one of a phenyl group-containing acrylic type resin and a butadiene-acrylonitrile type resin. That is, the resin particles may be any of phenyl group-containing acrylic type resin particles, butadiene-acrylonitrile type resin particles, resin particles containing a phenyl group-containing acrylic type resin and a butadiene-acrylonitrile type resin, and a combination of two types or three types of these resin particles.

The layer configuration of the separator of the present disclosure will be explained referring to the drawings.

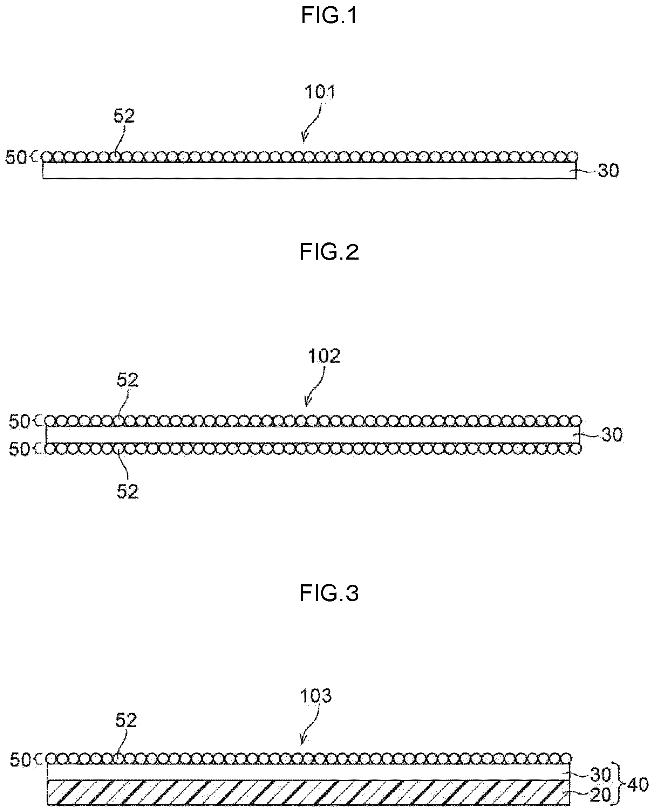

Each of FIG. 1 to FIG. 7 is a schematic cross-sectional view of an embodiment example of the separator of the present disclosure. FIG. 1 to FIG. 7 are schematic cross-sectional views mainly illustrating the stacking order of the layers, and the structure of each layer is abstracted or simplified. In FIG. 1 to FIG. 7, layers having similar functions are denoted by the same reference numerals.

The separator 101 shown in FIG. 1 is a separator in which an adhesive layer 50 is disposed on one side of a porous layer 30.

The separator 102 shown in FIG. 2 is a separator in which the adhesive layer 50 is disposed on both sides of the porous layer 30. The components and/or the compositions of one of the adhesive layers 50 and the other adhesive layer 50 may be the same or different.

The separator 103 shown in FIG. 3 is a separator in which the porous layer 30 is disposed on one side of a porous substrate 20 and the adhesive layer 50 is disposed on one side of a laminated body 40 of the porous substrate 20 and one porous layer 30. In the separator 103, the adhesive layer 50 is disposed on the surface of the porous layer 30.

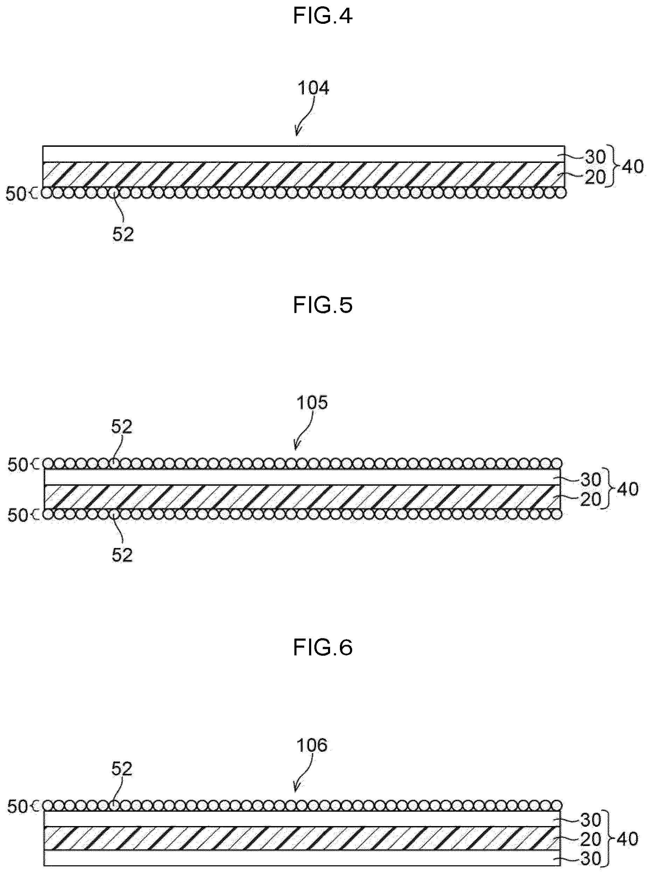

The separator 104 shown in FIG. 4 is a separator in which the porous layer 30 is disposed on one side of the porous substrate 20 and the adhesive layer 50 is disposed on one side of the laminated body 40 of the porous substrate 20 and one porous layer 30. In the separator 104, the adhesive layer 50 is disposed on the surface of the porous substrate 20.

The separator 105 shown in FIG. 5 is a separator in which the porous layer 30 is disposed on one side of the porous substrate 20 and the adhesive layer 50 is disposed on both sides of the laminated body 40 of the porous substrate 20 and one porous layer 30. The components and/or the compositions of one of the adhesive layers 50 and the other adhesive layer 50 may be the same or different.

The separator 106 shown in FIG. 6 is a separator in which the porous layer 30 is disposed on both sides of the porous substrate 20 and the adhesive layer 50 is disposed on one side of the laminated body 40 of the porous substrate 20 and two porous layers 30. The components and/or the compositions of one of the porous layers 30 and the other porous layer 30 may be the same or different.

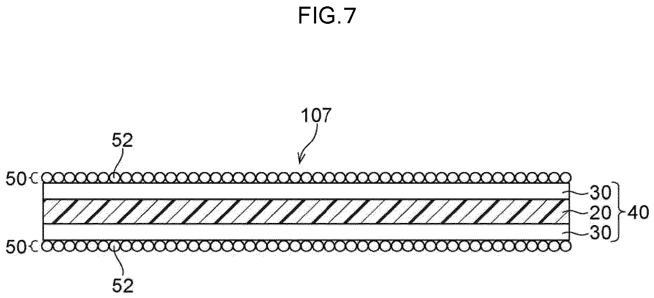

The separator 107 shown in FIG. 7 is a separator in which the porous layer 30 is disposed on both sides of the porous substrate 20 and the adhesive layer 50 is disposed on both sides of the laminated body 40 of the porous substrate 20 and two porous layers 30. The components and/or the compositions of one of the porous layers 30 and the other porous layer 30 may be the same or different. The components and/or the compositions of one of the adhesive layers 50 and the other adhesive layer 50 may be the same or different.

From the viewpoint of bonding the separator to both facing electrodes, the two surfaces of the separator are preferably both the adhesive layer 50. From this viewpoint, the separator 102, the separator 105, and the separator 107 are preferable.

In the separators 103 to 107, the porous layer 30 is a layer disposed on the surface of the porous substrate 20. The porous layer 30 may be provided only on one side of the porous substrate 20 or may be provided on both sides of the porous substrate 20. When the porous layer 30 is provided on both sides of the porous substrate 20, the heat resistance of the separator is better, and the safety of the battery can be further improved. In addition, the separator is less likely to be curled and has excellent handleability during the production of the battery. When the porous layer 30 is provided only on one side of the porous substrate 20, the ion permeability of the separator is better. In addition, the thickness of the entire separator can be suppressed, and a battery having a higher energy density can be produced.

The adhesive layer 50 is a layer disposed on the surface of the porous substrate 20 or the porous layer 30 and exists as the outermost layer of the separator.

The adhesive layer 50 is preferably a layer containing resin particles 52 from the viewpoint of ion permeability. The adhesive layer 50 preferably has a structure in which a large number of resin particles 52 are arranged adjacent to each other on the surface of the porous substrate 20 or the porous layer 30 from the viewpoint of better adhesiveness to an electrode, and the resin particles 52 preferably form a structure of one layer in the thickness direction from the viewpoint of increasing the energy density of the battery. However, the structure of the adhesive layer 50 is not limited to the above structure, and the adhesive layer 50 may have a structure in which a large number of resin particles 52 are scattered on the surface of the porous substrate 20 or the porous layer 30 or may have a structure in which a plurality of layers of the resin particles 52 are stacked in the thickness direction.

In the separator which is bonded to an electrode, some or all of the resin particles 52 contained in the adhesive layer 50 are melted by heat application for bonding the separator to the electrode, and thus adjacent resin particles 52 are connected to each other, and some or all of the resin particles 52 do not retain the particle shape in some cases.

Hereinafter, the details of the porous substrate, the porous layer, and the adhesive layer of the separator of the present disclosure will be explained.

### [Porous Substrate]

In the present disclosure, the porous substrate means a substrate having pores or voids therein. Examples of such a substrate include: a microporous film; a porous sheet composed of a fibrous material, such as a non-woven fabric and paper; and a composite porous sheet in which one or more other porous layers are stacked on the microporous film or the porous sheet. In the present disclosure, a microporous film is preferable from the viewpoint of thinning and strength of the separator. The microporous film means a film having a large number of micropores therein, having a structure in which the micropores are connected to each other and allowing gas or liquid to pass from one side to the other side.

The material of the porous substrate is preferably an electrically insulating material.

The porous substrate preferably contains a thermoplastic resin, in order to impart shutdown function to the porous substrate. The shutdown function refers to the function of dissolving the constituent material to clog the pores of the porous substrate, thereby blocking ionic migration and preventing thermal runaway of the battery, when the battery temperature is raised. The thermoplastic resin is preferably a thermoplastic resin having a melting point lower than 200°C. Examples of the thermoplastic resin include polyesters such as polyethylene terephthalate, and polyolefins such as polyethylene and polypropylene, and of these, polyolefins are preferable.

The porous substrate is preferably a microporous film containing a polyolefin (referred to as "polyolefin microporous film" in the present disclosure). Examples of the polyolefin microporous film include polyolefin microporous films which are applied to the conventional separators for a battery, and one having sufficient mechanical properties and ion permeability is preferably selected from the polyolefin microporous films.

From the viewpoint of exhibiting shutdown function, the polyolefin microporous film is preferably a microporous film containing polyethylene, and the polyethylene content is preferably 95% by mass or more with respect to the mass of the entire polyolefin microporous film.

The polyolefin microporous film is preferably a microporous film containing polypropylene, from the viewpoint of imparting heat resistance to the extent that the film is not easily broken when exposed to a high temperature.

The polyolefin microporous film is preferably a polyolefin microporous film containing polyethylene and polypropylene, from the viewpoint of imparting shutdown function and heat resistance to the extent that the film is not easily broken when exposed to a high temperature. Examples of the polyolefin microporous film containing polyethylene and polypropylene include a microporous film in which polyethylene and polypropylene are mixed in one layer. The microporous film preferably contains 95% by mass or more of polyethylene and 5% by mass or less of polypropylene, from the viewpoint of achieving both shutdown function and heat resistance. In addition, from the viewpoint of achieving both shutdown function and heat resistance, a polyolefin microporous film having a lamination structure with two or more layers in which at least one layer contains polyethylene and at least one layer contains polypropylene is also preferable.

The polyolefin contained in the polyolefin microporous film is preferably a polyolefin having a weight-average molecular weight (Mw) of 100,000 to 5,000,000. When the Mw of the polyolefin is 100,000 or more, sufficient mechanical properties can be provided to the microporous film. On the other hand, when the Mw of the polyolefin is 5,000,000 or less, the shutdown characteristic of the microporous film is favorable, and formation of the microporous film is easy.

Examples of the method for producing the polyolefin microporous film include: a method of extruding a molten polyolefin resin from a T-die to form a sheet, crystallizing and then stretching the sheet, and then subjecting the sheet to heat treatment, thereby obtaining a microporous film; and a method of extruding a polyolefin resin melted with a plasticizer such as liquid paraffin from a T-die, cooling it to form a sheet, stretching the sheet, then extracting the plasticizer, and performing heat treatment, thereby obtaining a microporous film.

Examples of the porous sheet composed of a fibrous material include porous sheets, such as a non-woven fabric and paper, composed of fibrous materials, including polyesters such as polyethylene terephthalate, polyolefins such as polyethylene and polypropylene, heat-resistant resins such as a wholly aromatic polyamide, polyamideimide, polyimide, polyethersulfone, polysulfone, polyetherketone, and polyetherimide, and cellulose.

In the present disclosure, a heat-resistant resin refers to a resin having a melting point of 200°C or higher or a resin having no melting point and having a decomposition temperature of 200°C or higher. That is, the heat-resistant resin in the present disclosure is a resin that is not melted or decomposed in a temperature range of lower than 200°C.

Examples of the composite porous sheet include a sheet in which a functional layer is stacked on a microporous film or a porous sheet composed of a fibrous material. Such a composite porous sheet is preferable from the viewpoint that a function can be further added with the functional layer. Examples of the functional layer include a porous layer composed of a heat-resistant resin from the viewpoint of imparting heat resistance. Examples of the heat-resistant resin include one type or two or more types of heat-resistant resins selected from a wholly aromatic polyamide, polyamideimide, polyimide, polyether sulfone, polysulfone, polyether ketone, and polyetherimide. Examples of the method of forming a composite include a method of applying a functional layer to a microporous film or a porous sheet, a method of bonding a microporous film or a porous sheet and a functional layer with an adhesive, and a method of thermally press-bonding a microporous film or a porous sheet with a functional layer.

The surface of the porous substrate may be subjected to various surface treatments within the range of not impairing the nature of the porous substrate, for the purpose of improving the wettability with the coating liquid for forming the porous layer. As the surface treatment, corona treatment, plasma treatment, flame treatment, UV irradiation treatment, and the like may be mentioned.

### - Characteristics of Porous Substrate -

The thickness of the porous substrate is preferably 15 µm or less, more preferably 12 µm or less, and still more preferably 10 µm or less, from the viewpoint of increasing the energy density of the battery, and the thickness is preferably 3 µm or more, more preferably 5 µm or more, and still more preferably 7 µm or more, from the viewpoint of the production yield of the separator and the production yield of the battery.

The thickness of the porous substrate is determined by measuring 20 points in a 10-cm square with a contact-type thickness meter and taking an average thereof.

The air permeability of the porous substrate is preferably 30 seconds/100 mL or more, more preferably 50 seconds/100 mL or more, and still more preferably 70 seconds/100 mL or more, from the viewpoint of suppressing a short circuit of the battery.

The air permeability of the porous substrate is preferably 200 seconds/100 mL or less, more preferably 180 seconds/100 mL or less, and still more preferably 160 seconds/100 mL or less, from the viewpoint of ion permeability and from the viewpoint of suppressing clogging of the porous structure at the boundary between the porous substrate and the porous layer or the adhesive layer when exposed to a high temperature.

The air permeability (second/100 mL) of the porous substrate is measured according to JIS P8117: 2009 using a digital Oken-type air permeability tester.

### [Porous Layer]

The porous layer has a large number of micropores therein, has a structure in which the micropores are connected to each other and is a layer through which gas or liquid can pass from one side to the other side.

When the separator of the present disclosure has the porous substrate, the porous layer may be provided on only one side of the porous substrate or on both sides of the porous substrate. When the porous layer is provided on both sides of the porous substrate, the separator is less likely to be curled and has excellent handleability during the production of the battery. When the porous layer is provided only on one side of the porous substrate, the ion permeability of the separator is better. In addition, the thickness of the entire separator can be suppressed, and a battery having a higher energy density can be produced.

The porous layer that the separator of the present disclosure has contains at least inorganic particles and a binder resin.

### - Inorganic Particles -

Examples of the inorganic particles include metal hydroxide particles, metal oxide particles, metal sulfate particles, metal carbonate particles, metal nitride particles, and clay mineral particles.

Examples of the metal hydroxide constituting the metal hydroxide particles include magnesium hydroxide, aluminum hydroxide, calcium hydroxide, chromium hydroxide, zirconium hydroxide, cerium hydroxide, nickel hydroxide, and boron hydroxide, and magnesium hydroxide is preferable.

Examples of the metal oxide constituting the metal oxide particles include silica, alumina, boehmite (alumina monohydrate), titania, zirconia, magnesium oxide, and barium oxide, and alumina is preferable.

Examples of the metal sulfate constituting the metal sulfate particles include barium sulfate, and calcium sulfate, and barium sulfate is preferable.

Examples of the metal carbonate constituting the metal carbonate particles include calcium carbonate, magnesium carbonate, and barium carbonate.

Examples of the metal nitride constituting the metal nitride particles include boron nitride, and aluminum nitride.

Examples of the clay mineral particles include those of calcium silicate, and talc.

The inorganic particles may be inorganic particles surface-modified with a silane coupling agent or the like.

One kind of the inorganic particles may be used alone, or a combination of two or more kinds thereof may be used.

The inorganic particles are preferably at least one selected from the group consisting of metal hydroxide particles, metal oxide particles, and metal sulfate particles from the viewpoint of stability to an electrolyte solution and electrochemical stability.

The particle shape of the inorganic particles is not limited and may be any of a spherical shape, an elliptical shape, a plate shape, a needle shape, and an indefinite shape. The inorganic particles contained in the porous layer are preferably plate-shaped particles or non-aggregated primary particles from the viewpoint of suppressing a short circuit of the battery.

The average primary particle diameter of the entire inorganic particles contained in the porous layer is preferably 0.01 µm or more, more preferably 0.02 µm or more, and still more preferably 0.03 µm or more, from the viewpoint of the ion permeability of the porous layer.

The average primary particle diameter of the entire inorganic particles contained in the porous layer is preferably 1.0 µm or less, more preferably 0.9 µm or less, and still more preferably 0.8 µm or less from the viewpoint of suppressing peeling of the layers between the porous layer and the porous substrate or the adhesive layer and maintaining the adhesion of the separator to an electrode.

The average primary particle diameter of the inorganic particles is determined by measuring the major diameters of 100 inorganic particles randomly selected by observation with a scanning electron microscope (SEM) and averaging the major diameters of the 100 particles. The sample subjected to the SEM observation is the inorganic particles which are a material for forming the porous layer or the inorganic particles which are taken out from the porous layer. The method for taking out the inorganic particles from the porous layer is not restricted. Examples of the method include: a method in which the porous layer peeled off from the separator is immersed in an organic solvent in which the binder resin is dissolved to dissolve the binder resin in the organic solvent and take out the inorganic particles; and a method in which the porous layer peeled off from the separator is heated to about 800°C to eliminate the binder resin and take out the inorganic particles.

The inorganic particle content is preferably 60% by mass to 99% by mass, more preferably 65% by mass to 98% by mass, and still more preferably 68% by mass to 96% by mass with respect to the total mass of the porous layer from the viewpoint of achieving the heat resistance and the ion permeability of the porous layer, the adhesiveness of the porous layer to the porous substrate, and the like in a well-balanced manner.

When the porous layer is provided on both sides of the porous substrate, the type or the amount of the inorganic particles contained in one porous layer and the type or the amount of the inorganic particles contained in the other porous layer may be the same or different.

### - Organic Particles -

The porous layer may contain organic particles. Examples of the organic particles include: particles of a crosslinked polymer such as crosslinked poly (meth)acrylic acid, crosslinked poly (meth)acrylate, crosslinked polysilicone, crosslinked polystyrene, crosslinked polydivinylbenzene, a styrene-divinylbenzene copolymer crosslinked product, a melamine resin, a phenol resin, and a benzoguanamine-formaldehyde condensate; and particles of a heat-resistant polymer such as polysulfone, polyacrylonitrile, aramid, and polyacetal.

The resin constituting the organic particles may be a mixture, a modified product, a derivative, a copolymer (a random copolymer, an alternating copolymer, a block copolymer, or a graft copolymer), or a crosslinked product of the above exemplary materials.

One kind of the organic particles may be used alone, or a combination of two or more kinds thereof may be used.

### - Binder Resin -

The binder resin contained in the porous layer has a function of binding the inorganic particles contained in the porous layer to each other as well as a function of bonding the porous layer to the porous substrate, a function of bonding the porous layer to an electrode, a function of improving the heat resistance of the porous layer, and the like.

When the porous layer is provided on both sides of the porous substrate, the type or the amount of the binder resin contained in one porous layer and the type or the amount of the binder resin contained in the other porous layer may be the same or different.

Examples of the binder resin include a polyamide type resin, an acrylic type resin, a fluorine type resin, a styrene-butadiene type resin, a homopolymer or a copolymer of a vinyl nitrile compound (acrylonitrile, methacrylonitrile, or the like), carboxymethyl cellulose, hydroxyalkyl cellulose, polyvinyl alcohol, polyvinyl butyral, polyvinyl pyrrolidone, polyether (polyethylene oxide, polypropylene oxide, or the like), polysulfone, polyketone, polyether ketone, polyether sulfone, and a mixture thereof.

The binder resin is preferably a resin having excellent affinity with the adhesive layer from the viewpoint of suppressing peeling of the layers between the porous layer and the adhesive layer, and specifically, at least one selected from the group consisting of a polyamide type resin, an acrylic type resin, a fluorine type resin, and a styrene-butadiene type resin is preferable.

The binder resin is preferably a polyamide type resin from the viewpoint of the heat resistance of the porous layer. Examples of the polyamide type resin include a wholly aromatic polyamide, polyamideimide, poly-N-vinylacetamide, polyacrylamide, copolymerized polyether polyamide, polyimide, and polyetherimide. One kind of the resins may be used alone, or a combination of two or more kinds thereof may be used.

Of the polyamide type resins, from the viewpoint of durability, a wholly aromatic polyamide is preferable. The wholly aromatic polyamide means a polyamide having a principal chain composed only of a benzene ring and an amide bond. However, the wholly aromatic polyamide may be copolymerized with a small amount of an aliphatic monomer. The wholly aromatic polyamide is also called aramid.

The wholly aromatic polyamide may be meta-type or para-type. Of the wholly aromatic polyamides, a meta-type wholly aromatic polyamide (also called meta-type aramid) is preferable from the viewpoint of easy formation of the porous layer and the viewpoint of excellent oxidation-reduction resistance in an electrode reaction. Specifically, the wholly aromatic polyamide is preferably polymetaphenylene isophthalamide or polyparaphenylene terephthalamide, and more preferably polymetaphenylene isophthalamide.

When the porous layer contains the wholly aromatic polyamide, the wholly aromatic polyamide content is preferably 85% by mass to 100% by mass, more preferably 90% by mass to 100% by mass, and still more preferably 95% by mass to 99% by mass, with respect to the total amount of all the resins contained in the porous layer.

Examples of the acrylic type resin include a homopolymer or a copolymer of an acrylic type monomer and a copolymer of an acrylic type monomer and a styrene type monomer. One kind of the resins may be used alone, or a combination of two or more kinds thereof may be used.

Examples of the acrylic type monomer of the acrylic type resin include (meth)acrylic acid, methyl (meth)acrylate, ethyl (meth)acrylate, isopropyl (meth)acrylate, n-butyl (meth)acrylate, isobutyl (meth)acrylate, t-butyl (meth)acrylate, n-hexyl (meth)acrylate, 2-ethylhexyl (meth)acrylate, lauryl (meth)acrylate, stearyl (meth)acrylate, cyclohexyl (meth)acrylate, dicyclopentanyl (meth)acrylate, isobornyl (meth)acrylate, 2-hydroxyethyl (meth)acrylate, hydroxypropyl (meth)acrylate, and 4-hydroxybutyl (meth)acrylate. The acrylic type monomer is preferably a (meth)acrylic acid alkyl ester. The alkyl group in the ester moiety of the (meth)acrylic acid alkyl ester is preferably an alkyl group having 1 to 10 carbon atoms, and more preferably an alkyl group having 1 to 8 carbon atoms. One kind of the acrylic type monomers may be used alone, or a combination of two or more kinds thereof may be used.

Examples of the styrene type monomer of the acrylic type resin include: styrene, α-methylstyrene; an alkyl-substituted styrene such as 2-methylstyrene, 3-methylstyrene, 4-methylstyrene, 2-ethylstyrene, 3-ethylstyrene, and 4-ethylstyrene; a halogen-substituted styrene such as 2-chlorostyrene, 3-chlorostyrene, and 4-chlorostyrene; and a fluorine-substituted styrene such as 4-fluorostyrene and 2,5-difluorostyrene. The styrene type monomer is preferably styrene or α-methylstyrene, and more preferably styrene. One kind of the styrene type monomers may be used alone, or a combination of two or more kinds thereof may be used.

Examples of the fluorine type resin include a polyvinylidene fluoride type resin. Examples of the polyvinylidene fluoride type resin include: a homopolymer of vinylidene fluoride (namely, polyvinylidene fluoride); a copolymer of vinylidene fluoride and a halogen-containing monomer such as hexafluoropropylene, tetrafluoroethylene, trifluoroethylene, chlorotrifluoroethylene, vinyl fluoride, and trichloroethylene; a copolymer of vinylidene fluoride and a monomer other than halogen-containing monomers; a copolymer of vinylidene fluoride, a halogen-containing monomer, and a monomer other than halogen-containing monomers; and a mixture thereof. One kind of the resins may be used alone, or a combination of two or more kinds thereof may be used.

The styrene-butadiene type resin is a copolymer of a styrene type monomer and butadiene. Examples of the styrene type monomer include: styrene, α-methylstyrene; an alkyl-substituted styrene such as 2-methylstyrene, 3-methylstyrene, 4-methylstyrene, 2-ethylstyrene, 3-ethylstyrene, and 4-ethylstyrene; a halogen-substituted styrene such as 2-chlorostyrene, 3-chlorostyrene, and 4-chlorostyrene; and a fluorine-substituted styrene such as 4-fluorostyrene and 2,5-difluorostyrene. The styrene type monomer is preferably styrene or α-methylstyrene, and more preferably styrene. One kind of the styrene type monomers may be used alone, or two or more kinds thereof may be used in combination.

A small amount of an acrylic type monomer may be copolymerized in the styrene-butadiene type resin. The acrylic type monomer is preferably a (meth)acrylic acid alkyl ester. The alkyl group in the ester moiety of the (meth)acrylic acid alkyl ester is preferably an alkyl group having 1 to 10 carbon atoms, and more preferably an alkyl group having 1 to 8 carbon atoms. Specific examples of the acrylic type monomer include methyl (meth)acrylate, ethyl (meth)acrylate, isopropyl (meth)acrylate, n-butyl (meth)acrylate, and 2-ethylhexyl (meth)acrylate. One kind of the acrylic type monomers may be used alone, or a combination of two or more kinds thereof may be used.

The binder resin content is preferably 1% by mass to 40% by mass, more preferably 2% by mass to 35% by mass, and still more preferably 4% by mass to 32% by mass with respect to the total mass of the porous layer from the viewpoint of achieving the heat resistance and the ion permeability of the porous layer, the adhesiveness of the porous layer to the porous substrate, and the like in a well-balanced manner.

### - Other Components -

The porous layer may contain an additive, for example, a dispersant such as a surfactant, a wetting agent, an antifoaming agent, a pH adjuster, or the like. The dispersant is added to a coating liquid for forming the porous layer for the purpose of improving the dispersibility, the coatability, or the storage stability. The wetting agent, the antifoaming agent, or the pH adjuster is added to a coating liquid for forming the porous layer, for example, for the purpose of improving the compatibility with the porous substrate, for the purpose of suppressing mixing of air into the coating liquid, or for the purpose of adjusting the pH.

### - Characteristics of Porous Layer -

The thickness of the porous layer per layer is preferably 0.5 µm or more, more preferably 1.0 µm or more, and still more preferably 1.5 µm or more from the viewpoint of heat resistance, and the thickness is preferably 5.0 µm or less, more preferably 4.0 µm or less, and still more preferably 3.5 µm or less from the viewpoint of ion permeability and the energy density of the battery.

When the porous layer is provided on both sides of the porous substrate, the thickness of the porous layer is preferably 1.0 µm or more, more preferably 2.0 µm or more, still more preferably 2.5 µm or more and is preferably 10.0 µm or less, more preferably 8.0 µm or less, and still more preferably 6.0 µm or less, in terms of the total thickness of both sides.

The thickness of the porous layer is a value obtained by subtracting the thickness of the porous substrate from the thickness of the flat film obtained by removing the adhesive layer from the separator. The thickness of the flat film obtained by peeling off the adhesive layer from the separator is determined by measuring 20 points in a 10-cm square with a contact-type thickness meter and taking an average thereof.

### [Adhesive Layer]

The adhesive layer is a layer disposed on a surface of the porous layer or the porous substrate and exists as the outermost layer of the separator. The adhesive layer has a large number of gaps or micropores and is a layer through which gas or liquid can pass from one side to the other side.

From the viewpoint of ion permeability, the adhesive layer is preferably an adhesive layer containing resin particles. The adhesive layer containing resin particles has excellent ion permeability due to the presence of gaps among the resin particles. The resin particles preferably maintain a form in an electrolyte solution and are preferably electrochemically stable.

The resin particles preferably contain at least one of a phenyl group-containing acrylic type resin and a butadiene-acrylonitrile type resin. That is, the resin particles may be any of phenyl group-containing acrylic type resin particles, butadiene-acrylonitrile type resin particles, resin particles containing a phenyl group-containing acrylic type resin and a butadiene-acrylonitrile type resin, and a combination of two types or three types of these resin particles.

When the adhesive layer contains the resin particles, the adhesive layer may further contain a non-granular resin. The resin functions as, for example, a binder resin for the resin particles or a binder resin between the resin particles and the porous layer or the porous substrate. The resin is preferably at least one of a phenyl group-containing acrylic type resin and a butadiene-acrylonitrile type resin.

When the adhesive layer contains the resin particles, the average primary particle diameter of the entire resin particles contained in the adhesive layer is preferably 0.1 µm or more, more preferably 0.2 µm or more, and still more preferably 0.3 µm or more, from the viewpoint of the ion permeability of the adhesive layer.

The average primary particle diameter of the entire resin particles contained in the adhesive layer is preferably 1.0 µm or less, more preferably 0.9 µm or less, and still more preferably 0.8 µm or less from the viewpoint that the resin particles do not easily fall off.

The average primary particle diameter of the resin particles is determined by measuring the major diameters of 100 resin particles randomly selected by observation with a scanning electron microscope (SEM) and averaging the major diameters of the 100 particles. The sample subjected to the SEM observation is the resin particles which are a material for forming the adhesive layer or the resin particles which are taken out from the adhesive layer.

The adhesive layer contains a phenyl group-containing acrylic type resin and a butadiene-acrylonitrile type resin. The phenyl group-containing acrylic type resin and the butadiene-acrylonitrile type resin contained in the adhesive layer may be separate molecules of the two types of resins, molecules of the two types of resins connected to each other, or a mixture thereof.

In the phenyl group-containing acrylic type resin and the butadiene-acrylonitrile type resin contained in the adhesive layer, the amount of the butadiene unit in the total amount of the acrylic type unit, the styrene type unit, the butadiene unit, and the acrylonitrile unit contained in both resins is 3 mol% to 50 mol%, preferably 3.2 mol% to 40 mol%, and more preferably 3.5 mol% to 30 mol%.

The mass ratio of the phenyl group-containing acrylic type resin to the butadiene-acrylonitrile type resin (phenyl group-containing acrylic type resin : butadiene-acrylonitrile type resin) contained in the adhesive layer is preferably 60:40 to 95:5, more preferably 55:45 to 92:8, and still more preferably 51:49 to 90:10 from the viewpoint of easily bonding the adhesive layer to an electrode by wet heat press.

### - Phenyl Group-Containing Acrylic Type Resin -

The polymerization component that gives a phenyl group to the phenyl group-containing acrylic type resin is not limited. Examples of the polymerization component that gives a phenyl group include phenyl (meth)acrylate and a styrene type monomer.

The phenyl group-containing acrylic type resin preferably has a styrene type unit from the viewpoint of easily bonding the resin to an electrode by wet heat press. That is, the phenyl group-containing acrylic type resin preferably contains at least an acrylic type monomer and a styrene type monomer in the polymerization components.

When the phenyl group-containing acrylic type resin contains an acrylic type monomer and a styrene type monomer in the polymerization components, the monomers may be contained as a random copolymer, an alternating copolymer, a block copolymer, or a graft copolymer thereof. For example, the phenyl group-containing acrylic type resin may be a block copolymer or a graft copolymer of an acrylic type monomer and a styrene type monomer in which the acrylic type unit may be disposed in the core of the phenyl group-containing acrylic type resin particle and the styrene type unit may be disposed in the shell.

The acrylic type monomer is preferably at least one selected from the group consisting of (meth)acrylic acid, a (meth)acrylic acid salt, and a (meth)acrylate. One kind of the acrylic type monomers may be used alone, or two or more kinds thereof may be used in combination.

Examples of the (meth)acrylic acid salt include sodium (meth)acrylate, potassium (meth)acrylate, magnesium (meth)acrylate, and zinc (meth)acrylate.

Examples of the (meth) acrylate include methyl (meth)acrylate, ethyl (meth)acrylate, isopropyl (meth)acrylate, n-butyl (meth)acrylate, isobutyl (meth)methacrylate, t-butyl (meth)acrylate, n-hexyl (meth)acrylate, 2-ethylhexyl (meth)acrylate, lauryl (meth)acrylate, stearyl (meth)acrylate, cyclohexyl (meth)acrylate, dicyclopentanyl (meth)acrylate, isobornyl (meth)acrylate, 2-hydroxyethyl (meth)acrylate, 2-hydroxypropyl (meth)acrylate, 4-hydroxybutyl (meth)acrylate, 2-(diethylamino)ethyl (meth)acrylate, methoxypolyethylene glycol (meth)acrylate, and phenyl (meth)acrylate.

The acrylic type monomer is preferably a (meth)acrylic acid alkyl ester. The alkyl group in the ester moiety of the (meth)acrylic acid alkyl ester is preferably an alkyl group having 1 to 10 carbon atoms, and more preferably an alkyl group having 1 to 8 carbon atoms.

Specifically, the acrylic type monomer is preferably methyl (meth)acrylate, ethyl (meth)acrylate, isopropyl (meth)acrylate, n-butyl (meth)acrylate, or 2-ethylhexyl (meth)acrylate. One kind of the acrylic type monomers may be used alone, or two or more kinds thereof may be used in combination.

Examples of the styrene type monomer include: styrene, α-methylstyrene; an alkyl-substituted styrene such as 2-methylstyrene, 3-methylstyrene, 4-methylstyrene, 2-ethylstyrene, 3-ethylstyrene, and 4-ethylstyrene; a halogen-substituted styrene such as 2-chlorostyrene, 3-chlorostyrene, and 4-chlorostyrene; and a fluorine-substituted styrene such as 4-fluorostyrene and 2,5-difluorostyrene. One kind of the styrene type monomers may be used alone, or two or more kinds thereof may be used in combination.

The styrene type monomer is preferably styrene or α-methylstyrene, and more preferably styrene.

The phenyl group-containing acrylic type resin preferably has a styrene type unit and an acrylic type unit, and the molar ratio of both units (styrene type unit : acrylic type unit) is preferably 30:70 to 50:50, more preferably 35:65 to 45:55, and still more preferably 37:63 to 43:57, from the viewpoint of easily bonding the resin to an electrode by wet heat press. The molar ratio is determined by nuclear magnetic resonance (NMR). The details of the NMR are as described above.

The phenyl group-containing acrylic type resin may contain a monomer other than the acrylic type monomer and the styrene type monomer in the polymerization components. Examples of the monomer include an acid group-containing monomer. Examples of the acid group-containing monomer include: a monomer having a carboxy group, such as crotonic acid, maleic acid, fumaric acid, and itaconic acid; a monomer having a sulfonic acid group, such as vinylsulfonic acid, methylvinylsulfonic acid, (meth)allylsulfonic acid, (meth)acrylic acid-2-ethyl sulfonate, 2-acrylamide-2-methylpropanesulfonic acid, and 3-allyloxy-2-hydroxypropanesulfonic acid; a monomer having a phosphate group, such as 2-(meth)acryloyloxyethyl phosphate, methyl-2-(meth)acryloyloxyethyl phosphate, and ethyl-(meth)acryloyloxyethyl phosphate; and a monomer having a hydroxy group, such as 2-hydroxyethyl (meth)acrylate, 2-hydroxypropyl (meth)acrylate, and 4-hydroxybutyl (meth)acrylate. One kind of the acid group-containing monomers may be used alone, or two or more kinds thereof may be used in combination.

The phenyl group-containing acrylic type resin may contain a crosslinkable monomer in the polymerization components. Examples of the crosslinkable monomer include a polyfunctional monomer having two or more polymerizable groups. Examples of the polyfunctional monomer include: a divinyl compound such as divinylbenzene; a di(meth)acrylate compound such as diethylene glycol dimethacrylate, ethylene glycol dimethacrylate, diethylene glycol diacrylate, and 1,3-butylene glycol diacrylate; a tri(meth)acrylate compound such as trimethylolpropane trimethacrylate and trimethylol propane triacrylate; and an ethylenically unsaturated monomer containing an epoxy group, such as allyl glycidyl ether and glycidyl methacrylate. One kind of the polyfunctional monomers may be used alone, or two or more kinds thereof may be used in combination.

### - Butadiene-Acrylonitrile Type Resin -

The butadiene-acrylonitrile type resin may be a resin composed only of a butadiene unit and an acrylonitrile unit or a resin composed of a butadiene unit, an acrylonitrile unit, and another monomer unit. That is, the butadiene-acrylonitrile type resin may be a bipolymer of butadiene and acrylonitrile or may be a copolymer of butadiene, acrylonitrile, and another monomer. Examples of the other monomer include a styrene type monomer and an acrylic type monomer.

Examples of the styrene type monomer include: styrene, α-methylstyrene; an alkyl-substituted styrene such as 2-methylstyrene, 3-methylstyrene, 4-methylstyrene, 2-ethylstyrene, 3-ethylstyrene, and 4-ethylstyrene; a halogen-substituted styrene such as 2-chlorostyrene, 3-chlorostyrene, and 4-chlorostyrene; and a fluorine-substituted styrene such as 4-fluorostyrene and 2,5-difluorostyrene. The styrene type monomer is preferably styrene or α-methylstyrene, and more preferably styrene. One kind of the styrene type monomers may be used alone, or two or more kinds thereof may be used in combination.

Examples of the acrylic type monomer include (meth)acrylic acid, methyl (meth)acrylate, ethyl (meth)acrylate, isopropyl (meth)acrylate, n-butyl (meth)acrylate, isobutyl (meth)acrylate, t-butyl (meth)acrylate, n-hexyl (meth)acrylate, 2-ethylhexyl (meth)acrylate, lauryl (meth)acrylate, stearyl (meth)acrylate, cyclohexyl (meth)acrylate, dicyclopentanyl (meth)acrylate, isobornyl (meth)acrylate, 2-hydroxyethyl (meth)acrylate, hydroxypropyl (meth)acrylate, and 4-hydroxybutyl (meth)acrylate. The acrylic type monomer is preferably a (meth)acrylic acid alkyl ester. The alkyl group in the ester moiety of the (meth)acrylic acid alkyl ester is preferably an alkyl group having 1 to 10 carbon atoms, and more preferably an alkyl group having 1 to 8 carbon atoms. One kind of the acrylic type monomers may be used alone, or two or more kinds thereof may be used in combination.

The molar ratio of the butadiene unit to the acrylonitrile unit (butadiene unit : acrylonitrile unit) contained in the butadiene-acrylonitrile type resin is preferably 60:40 to 1:99 and more preferably 50:50 to 10:90 from the viewpoint of excellent affinity with the phenyl group-containing acrylic type resin. The molar ratio is determined by nuclear magnetic resonance (NMR). The details of the NMR are as described above.

### - Other Resin -

The adhesive layer may contain a resin other than the phenyl group-containing acrylic type resin and the butadiene-acrylonitrile type resin. Examples of the other resin include a polyvinylidene fluoride type resin, a fluorine type rubber, a homopolymer or a copolymer of a vinyl nitrile compound (acrylonitrile, methacrylonitrile, or the like), carboxymethyl cellulose, a hydroxyalkyl cellulose, a polyvinyl alcohol, a polyvinyl butyral, polyvinyl pyrrolidone, a polyether (polyethylene oxide, polypropylene oxide, or the like), and a mixture of two or more kinds thereof. These resins may be contained in the form of resin particles or as a binder resin of the resin particles.

The mass proportion of the other resin in the entire resin of the adhesive layer is preferably 10% by mass or less, more preferably 5% by mass or less, and still more preferably 1% by mass or less, and the other resin is particularly preferably not substantially contained.

The total mass proportion of the phenyl group-containing acrylic type resin and the butadiene-acrylonitrile type resin in the entire resin of the adhesive layer is preferably 90% by mass or more, more preferably 95% by mass or more, still more preferably 99% by mass or more, and particularly preferably 100% by mass.

The glass transition temperature of the entire resin contained in the adhesive layer is preferably 58°C or higher, more preferably 58.5°C or higher, and still more preferably 59°C or higher from the viewpoint of excellent adhesiveness to an electrode although the detailed mechanism is unknown.

The upper limit of the glass transition temperature of the entire resin contained in the adhesive layer is not limited but is preferably 100°C or lower, more preferably 95°C or lower, and still more preferably 94°C or lower.

The glass transition temperature of the resin can be controlled by adjusting the types and the copolymerization ratio of the monomers which are the polymerization components with the FOX formula as a guideline.

The glass transition temperature of the resin is determined from a differential scanning calorimetry curve (DSC curve) obtained by differential scanning calorimetry (DSC). In the DSC curve, the temperature in the middle of the intersection point (1) and the intersection point (2) is defined as the glass transition temperature, where the intersection point of the baseline on the low-temperature side and the tangent line of the curve of the step-wise change portion is defined as the intersection point (1), and the intersection point of the baseline on the high-temperature side and the tangent line of the curve of the step-wise change portion is defined as the intersection point (2).

### - Other Components -

The adhesive layer may contain an additive, for example, a dispersant such as a surfactant, a wetting agent, an antifoaming agent, or a pH adjuster. The dispersant is added to, for example, a resin particle dispersion for forming the adhesive layer for the purpose of improving the dispersibility, the coatability, or the storage stability. The wetting agent, the antifoaming agent, or the pH adjuster is added to, for example, a resin particle dispersion for forming the adhesive layer for the purpose of improving the compatibility with the porous layer or the porous substrate, for the purpose of suppressing mixing of air into the resin particle dispersion, or for the purpose of adjusting the pH.

### - Characteristics of Adhesive Layer -

The basis weight (mass per unit area) of the adhesive layer is preferably 0.05 g/m² or more, more preferably 0.07 g/m² or more, and still more preferably 0.1 g/m² or more per one side of the separator from the viewpoint of adhesiveness to an electrode.

From the viewpoint of ion permeability, the basis weight of the adhesive layer is preferably 1.0 g/m² or less, more preferably 0.8 g/m² or less, and still more preferably 0.6 g/m² or less per one side of the separator.

When the adhesive layer is provided on both sides of the separator, the basis weight of the adhesive layer is preferably 0.1 g/m² to 2.0 g/m², more preferably 0.14 g/m² to 1.6 g/m², and still more preferably 0.2 g/m² to 1.2 g/m² as a total of both sides.

The basis weight of the adhesive layer is determined by cutting the separator into a size of 20 cm × 20 cm, measuring the mass of the layer portion corresponding to the adhesive layer, and dividing the mass by the area to obtain the total of both sides. When equal amounts of adhesive layers are formed on both sides of the separator, 1/2 of the total of both sides is defined as the basis weight (g/m²) per one side.

### [Characteristics of Separator]

The thickness of the separator is preferably 5 µm or more, more preferably 7 µm or more, and still more preferably 9 µm or more, from the viewpoint of the mechanical strength of the separator, and the thickness is preferably 22 µm or less, more preferably 20 µm or less, and still more preferably 18 µm or less, from the viewpoint of the energy density of the battery.

The thickness of the separator is determined by measuring 20 points in a 10-cm square with a contact-type thickness meter and taking an average thereof.

The air permeability of the separator is preferably 60 seconds/100 mL or more, more preferably 70 seconds/100 mL or more, and still more preferably 80 seconds/100 mL or more, from the viewpoint of suppressing a short circuit of the battery.

The air permeability of the separator is preferably 260 seconds/100 mL or less, more preferably 250 seconds/100 mL or less, and still more preferably 240 seconds/100 mL or less, from the viewpoint of ion permeability.

The air permeability (second/100 mL) of the separator is measured according to JIS P8117: 2009 using a digital Oken-type air permeability tester.

### [Method for Producing Separator]

The separator of the present disclosure is produced, for example, by the production method A or the production method B below. The production method A and the production method B are production methods of a separator having a porous substrate. When the porous substrate in the production method A and the production method B is replaced with a release sheet and the release sheet is peeled off at an appropriate timing, a separator having only the porous layer and the adhesive layer can be produced.

In the production method A and the production method B, the porous layer is formed on the porous substrate by a wet coating method. In the present disclosure, the wet coating method is a method of solidifying a coating layer in a coagulation liquid, and the dry coating method is a method of drying a coating layer to solidify the coating layer.

Production method A (non-continuous production method): A porous layer is formed on a porous substrate unwound from a roll to obtain a laminated body of the porous substrate and the porous layer, and then the laminated body is once wound around another roll. Next, an adhesive layer is formed on the laminated body unwound from the roll to obtain a separator, and the finished separator is wound around another roll.

Production method B (continuous production method): A porous layer and an adhesive layer are continuously or simultaneously formed on a porous substrate unwound from a roll, and the finished separator is wound around another roll.

The production method B may be any of the following forms B-1 to B-4.

Form B-1: A coating liquid for forming a porous layer is applied onto a porous substrate, and the resultant product is immersed in a coagulation liquid to solidify the coating layer, pulled out of the coagulation liquid, washed with water and dried. Then, a resin particle dispersion is applied and dried.

Form B-2: A coating liquid for forming a porous layer is applied onto a porous substrate, and the resultant product is immersed in a coagulation liquid to solidify the coating layer, pulled out of the coagulation liquid and washed with water. Then, a resin particle dispersion is applied and dried.

Form B-3: A coating liquid for forming a porous layer and a resin particle dispersion are simultaneously applied in two layers onto a porous substrate. The resultant product is immersed in a coagulation liquid to solidify the former coating layer, pulled out of the coagulation liquid, washed with water and dried.

Form B-4: A coating liquid for forming a porous layer is applied onto a porous substrate, and the resultant product is immersed in a coagulation liquid to solidify the coating layer and pulled out of the coagulation liquid. Washing with water and adhesion of resin particles are performed by transporting the resultant product in a water bath containing resin particles, and the resultant product is pulled out of the water bath and dried.

Hereinafter, details of the steps included in the production method will be explained using the production method B of the form B-1 as an example.

In the production method B of the form B-1, the porous layer is formed on at least one side of the porous substrate by the wet coating method to obtain a laminated body of the porous substrate and the porous layer, and then the adhesive layer is formed on at least one side of the laminated body by the dry coating method. The production method B of the form B-1 includes the following steps (1) to (7), and the steps (1) to (7) are sequentially performed.

### Step (1): Production of Coating Liquid for Forming Porous Layer

The coating liquid for forming the porous layer (hereinafter, referred to as "coating liquid" in the description of the production method) is produced by dissolving or dispersing the binder resin and the inorganic particles of the porous layer in a solvent. In the coating liquid, a component other than the binder resin and the inorganic particles is dissolved or dispersed as necessary.

The solvent used for preparing the coating liquid includes a solvent that dissolves the binder resin of the porous layer (hereinafter, also referred to as "good solvent"). Examples of the good solvent include polar amide solvents such as N-methylpyrrolidone, dimethylacetamide, dimethylformamide, and dimethylformamide.

The solvent used for preparing the coating liquid preferably contains a phase separation agent that induces phase separation from the viewpoint of forming a porous layer having a favorable porous structure. Therefore, the solvent used for preparing the coating liquid is preferably a mixed solvent of the good solvent and a phase separation agent. The phase separation agent is preferably mixed with the good solvent in such an amount that a viscosity suitable for coating can be ensured. Examples of the phase separation agent include water, methanol, ethanol, propyl alcohol, butyl alcohol, butanediol, ethylene glycol, propylene glycol, and tripropylene glycol.

The solvent used for preparing the coating liquid is preferably a mixed solvent of the good solvent and the phase separation agent containing 60% by mass or more of the good solvent and 5% by mass to 40% by mass of the phase separation agent from the viewpoint of forming a favorable porous structure.

The resin concentration of the coating liquid is preferably 1% by mass to 20% by mass from the viewpoint of forming a favorable porous structure. The inorganic particle concentration of the coating liquid is preferably 0.5% by mass to 50% by mass from the viewpoint of forming a favorable porous structure.

### Step (2): Production of Resin Particle Dispersion

The resin particle dispersion is produced by dispersing resin particles in an appropriate dispersion medium (for example, water). A surfactant may be added to the resin particle dispersion in order to increase the dispersibility of the resin particles in the dispersion medium. The resin particle dispersion may be a commercially available product or a diluent of a commercially available product.

The resin particle concentration in the resin particle dispersion is preferably 1% by mass to 60% by mass from the viewpoint of coating suitability.

### Step (3): Application of Coating Liquid

The coating liquid is applied to at least one side of the porous substrate to form the coating layer on the porous substrate. Examples of the method of applying the coating liquid to the porous substrate include a knife coating method, a Meyer bar coating method, a die coating method, a reverse roll coating method, a roll coating method, a gravure coating method, a screen printing method, an inkjet method, and a spray method. When the porous layer is formed on both sides of the porous substrate, it is preferable to simultaneously apply the coating liquid to both sides of the porous substrate from the viewpoint of productivity.

### Step (4): Solidification of Coating Layer

The porous substrate on which the coating layer has been formed is immersed in a coagulation liquid to solidify the binder resin while inducing phase separation in the coating layer, and a porous layer containing the binder resin and the inorganic particles is formed. Thus, a laminated body having the porous substrate and the porous layer is obtained.

The coagulation liquid generally contains the good solvent and the phase separation agent used for preparing the coating liquid, and water. The mixing ratio between the good solvent and the phase separation agent is preferably matched with the mixing ratio of the mixed solvent used for preparing the coating liquid in terms of production. The water content of the coagulation liquid is preferably 40% by mass to 90% by mass from the viewpoint of formation of a porous structure and productivity. The temperature of the coagulation liquid is, for example, 20°C to 50°C.

### Step (5): Water Washing and Drying of Coating Layer

The laminated body is pulled out of the coagulation liquid and washed with water. By washing the laminated body with water, the coagulation liquid is removed from the laminated body. Furthermore, by drying the laminated body, water is removed from the laminated body. Washing with water is performed, for example, by transporting the laminated body in a water washing bath. Drying is performed, for example, by transporting the laminated body in a high-temperature environment, blowing air to the laminated body, bringing the laminated body into contact with a heat roll, or the like. The drying temperature is preferably 40°C to 80°C.

### Step (6): Application of Resin Particle Dispersion

The resin particle dispersion is applied to at least one side of the laminated body. Examples of the method of applying the resin particle dispersion include a knife coating method, a gravure coating method, a Meyer bar coating method, a die coating method, a reverse roll coating method, a roll coating method, a screen printing method, an inkjet method, and a spray method.

### Step (7): Drying of Resin Particle Dispersion

The resin particle dispersion on the laminated body is dried to adhere the resin particles to the surface of the laminated body. Drying is performed, for example, by transporting the laminated body in a high-temperature environment, blowing air to the laminated body, or the like. The drying temperature is preferably 40°C to 100°C.

The production method A or the production method B of the form B-2 to the form B-4 can be performed by partially omitting or changing the above steps (1) to (7).

### <Non-Aqueous Secondary Battery>

The non-aqueous secondary battery of the present disclosure is a non-aqueous secondary battery that obtains electromotive force by doping and dedoping of lithium ions and has a positive electrode, a negative electrode, and the separator of the present disclosure. The doping means occlusion, support, adsorption, or insertion and means a phenomenon that lithium ions enter the active material of an electrode such as the positive electrode.

The non-aqueous secondary battery of the present disclosure has a structure in which, for example, a battery element in which a negative electrode and a positive electrode face each other with a separator interposed therebetween is enclosed in an exterior material together with an electrolyte solution. The non-aqueous secondary battery of the present disclosure is suitable for a non-aqueous electrolyte secondary battery, particularly for a lithium ion secondary battery.

In the non-aqueous secondary battery of the present disclosure, the separator of the present disclosure adheres well to an electrode by low-temperature and low-pressure wet heat press, and thus the productivity of the battery is excellent.

Hereinafter, aspect examples of the positive electrode, the negative electrode, the electrolyte solution, and the exterior material that the non-aqueous secondary battery of the present disclosure has will be explained.

Examples of an embodiment of the positive electrode include a structure in which an active material layer containing a positive electrode active material and a binder resin is formed on a current collector. The active material layer may further contain a conductive auxiliary agent. Examples of the positive electrode active material include a lithium-containing transition metal oxide, and specific examples thereof include LiCoO₂, LiNiO₂, LiMn_{1/2}Ni_{1/2}O₂, LiCo_{1/3}Mn_{1/3}Ni_{1/3}O₂, LiMn₂O₄, LiFePO₄, LiCo_{1/2}Ni_{1/2}O₂, and LiAl_{1/4}Ni_{3/4}O₂. Examples of the binder resin include a polyvinylidene fluoride type resin, and a styrene-butadiene copolymer. Examples of the conductive auxiliary agent include carbon materials such as acetylene black, Ketjen black, and graphite powder. Examples of the current collector include an aluminum foil, a titanium foil, a stainless steel foil, and the like, each having a thickness of 5 µm to 20 µm.

Examples of an embodiment of the negative electrode include a structure in which an active material layer containing a negative electrode active material and a binder resin is formed on a current collector. The active material layer may further contain a conductive auxiliary agent. Examples of the negative electrode active material include materials capable of electrochemically occluding lithium ions, and specific examples thereof include carbon materials, alloys of lithium with silicon, tin, aluminum, or the like, and wood's alloy. Examples of the binder resin include a polyvinylidene fluoride type resin, a styrene-butadiene copolymer, and the like. Examples of the conductive auxiliary agent include carbon materials such as acetylene black, Ketjen black, graphite powder, and ultrafine carbon fibers. Examples of the current collector include a copper foil, a nickel foil, and a stainless steel foil, each having a thickness of 5 µm to 20 µm. Instead of the negative electrode above, a metal lithium foil may be used as the negative electrode.

The electrolyte solution is a solution in which a lithium salt is dissolved in a non-aqueous solvent. Examples of the lithium salt include LiPF₆, LiBF₄, and LiClO₄. Examples of the non-aqueous solvent include: cyclic carbonates such as ethylene carbonate, propylene carbonate, fluoroethylene carbonate, difluoroethylene carbonate, and vinylene carbonate; chain carbonates such as dimethyl carbonate, diethyl carbonate, ethyl methyl carbonate, and a fluorine-substituted compound thereof; and cyclic esters such as γ-butyrolactone and γ-valerolactone. These non-aqueous solvents may be used singly or as a mixture. The electrolyte solution is suitably a solution which is obtained by mixing a cyclic carbonate and a chain carbonate at a mass ratio (cyclic carbonate : chain carbonate) of 20 : 80 to 40 : 60 and dissolving a lithium salt therein in the range of 0.5 mol/L to 1.5 mol/L.

Examples of the exterior material include an aluminum laminated film pack, and a metal can. The shape of the battery is a square shape, a cylindrical shape, a coin shape, or the like, but the separator of the present disclosure is suitable for any shape.

The non-aqueous secondary battery of the present disclosure can be produced, for example, by the production method 1 or the production method 2 below using a laminated material after producing the laminated material in which the separator of the present disclosure is disposed between a positive electrode and a negative electrode.

Production method 1: Electrodes and the separator are temporarily bonded by dry heat pressing the laminated material and then housed in an exterior material (for example, an aluminum laminated film pack; the same applies hereinafter), and an electrolyte solution is injected therein. Then, the laminated material is wet heat pressed from over the exterior material to bond the electrodes and the separator and seal the exterior material.

Production method 2: The laminated material is housed in an exterior material, and an electrolyte solution is injected therein. Then, the laminated material is wet heat pressed from over the exterior material to bond the electrodes and the separator and seal the exterior material.

In the production method 1 and the production method 2, the press temperature of the wet heat press is preferably 50°C to 80°C, and more preferably 60°C to 70°C. The press pressure of the wet heat press is preferably 40 kPa to 200 kPa, and more preferably 50 kPa to 100 kPa. The press time of the wet heat press is preferably adjusted according to the press temperature and the press pressure and is adjusted, for example, in the range of eight hours to 20 hours.

In the production of the laminated material in which the separator is disposed between the positive electrode and the negative electrode, the method of disposing the separator between the positive electrode and the negative electrode may be a method of stacking at least one layer each of the positive electrode, the separator, and the negative electrode in this order (so-called stack method) or may be a method of stacking the positive electrode, the separator, the negative electrode, and the separator in this order and winding them in the length direction.

### EXAMPLES

Hereinafter, the separator and the non-aqueous secondary battery of the present disclosure will be explained further specifically referring to Examples. The materials, the used amounts, the ratios, the treatment procedures, and the like illustrated in the following Examples can be changed, if appropriate without departing from the gist of the present disclosure. Therefore, the ranges of the separator and the non-aqueous secondary battery of the present disclosure should not be limitatively interpreted by the following specific examples.

In the following description, synthesis, treatment, production, and the like were performed at room temperature (25°C ± 3°C) unless otherwise specified.

### <Measurement Methods and Evaluation Methods>

The measurement methods and the evaluation methods applied in Examples and Comparative Examples are as follows.

### [Air Permeability of Separator and Porous Substrate]

The air permeability (second/100 mL) of the separator and the porous substrate was measured according to JIS P8117: 2009 using a digital Oken-type air permeability tester (Asahi Seiko Co., Ltd., EGO1-55-1MR).

### [Thicknesses of Separator and Porous Substrate]

The thicknesses of the separator and the porous substrate were determined by measuring 20 points in a 10-cm square with a contact type thickness meter (Mitutoyo Corporation, LITEMATIC VL-50S) and taking an average thereof. A spherical probe (Mitutoyo Corporation) with a sphere radius of 10 mm was used for the measuring terminal and was adjusted in such a manner that a load of 0.19 N was applied during the measurement.

### [Thickness of Porous Layer]

The thickness was determined by subtracting the thickness of the porous substrate from the thickness of the flat film obtained by removing the adhesive layer from the separator. The thickness of the flat film was determined by measuring 20 points in a 10-cm square with a contact type thickness meter (Mitutoyo Corporation, LITEMATIC VL-50S) and taking an average thereof. A spherical probe (Mitutoyo Corporation) with a sphere radius of 10 mm was used for the measuring terminal and was adjusted in such a manner that a load of 0.19 N was applied during the measurement.

### [Basis Weight of Adhesive Layer]

The total basis weight (g/m²) of both sides was determined by cutting the separator into a size of 20 cm × 20 cm, measuring the mass of the layer portion corresponding to the adhesive layer, and dividing the mass by the area. Since equal amounts of adhesive layers were formed on both sides of the separator in all the Examples and the Comparative Examples, the value of 1/2 of the total basis weight of both sides was defined as the basis weight (g/m²) per one side.

### [Average Primary Particle Diameter of Inorganic Particles]

The inorganic particles used for forming the porous layer were used as the sample and observed with a scanning electron microscope (SEM) to determine the average primary particle diameter. Specifically, the major diameters of 100 inorganic particles randomly selected by observation with a SEM were measured, and the average value of the major diameters of the 100 particles was defined as the average primary particle diameter (µm).

### [Average Primary Particle Diameter of Resin Particles]

A dried product of the resin particle dispersion used for forming the adhesive layer was used as the sample and observed with a SEM to determine the average primary particle diameter. Specifically, the major diameters of 100 resin particles randomly selected by observation with a SEM were measured, and the average value of the major diameters of the 100 particles was defined as the average primary particle diameter (µm).

### [Glass Transition Temperature of Resin]

A dried product of the resin particle dispersion used for forming the adhesive layer was used as the sample, and differential scanning calorimetry (DSC) was performed. Q200 Differential Scanning Calorimeter (TA Instruments) was used as a DSC apparatus, and the weight of the sample was set to 5 mg. The temperature was raised from -65°C to 150°C at a heating rate of 10°C/min, and after quenching, the temperature was raised again at the same heating rate to obtain a DSC curve. In the obtained DSC curve, the intersection point (1) of the baseline on the low-temperature side and the tangent line of the curve of the step-wise change portion and the intersection point (2) of the baseline on the high-temperature side and the tangent line of the curve of the step-wise change portion were determined, and the temperature in the middle of the intersection point (1) and the intersection point (2) was defined as the glass transition temperature (Tg, °C).

### [Composition of Resin]

The monomer units contained in the resin constituting the adhesive layer were quantified by NMR.

A dried product of the resin particle dispersion used for forming the adhesive layer was used as the sample. After swelling the sample with deuterated chloroform, using an NMR apparatus (JNM-ECA600 manufactured by JEOL Ltd.) and a semi-solid probe (FGMAS probe manufactured by JEOL Ltd.), at room temperature, a ¹H-NMR spectrum (a MAS rotation speed of 6 kHz, an observation width of 15 ppm, a point number of 32 k, and pulse repetition waiting time of four seconds) was measured at 600 MHz , and a ¹³C-NMR spectrum was measured at 150 MHz. The ¹³C-NMR spectrum was accumulated approximately 33000 times in a quantitative mode (a decoupling method with an inverse gate, a MAS rotation speed of 6 kHz, an observation width of 250 ppm, a point number of 32 k, and pulse repetition waiting time of 12 seconds).

### [Adhesive Strength]

A test secondary battery described below was prepared. The battery was subjected to a compression bending test (three-point bending measurement). The measurement was made by attaching a compression bending test jig to Tensilon (A&D Company, Limited, STB-1225S). The distance to the support stage was set to 4 cm, and the battery was placed on the support stage in such a manner that the short side direction of the battery was parallel to the long side direction of the indenter and that the compression position during the measurement was at the center in the long side direction of the electrodes in the battery. The displacement obtained when the indenter was lowered until a load of 0.1 N was applied was set to 0, and the measurement was started. The compression rate during the measurement was 2 mm/min, and the measurement was made up to 2 mm displacement. The yield point load (N) in the load displacement curve obtained from the results was defined as the adhesive strength. When the yield point load could not be observed, the maximum load (N) was defined as the adhesive strength. The results are shown in Table 3.

### [Heat Resistance]

Test secondary batteries described below were prepared. The batteries were charged at a constant current and a constant voltage of 0.2 C and 4.2 V at room temperature. Next, the batteries were placed in an oven at a temperature of 150°C, and weights of about 500 g were placed on the batteries. After 60 minutes, the batteries were taken out from the oven and cooled to room temperature. The voltages of the batteries were measured, and when the voltage was 3.5 V or less, it was determined that a short circuit occurred. The number of the short-circuited batteries of five batteries was classified as follows. The results are shown in Table 3.
A: 0
B: 1 or 2
C: 3 to 5

### <Production of Separator and Battery>

### [Example 1]

### - Production of Separator -

A mixed solvent of dimethylacetamide (DMAc) and tripropylene glycol (TPG) (DMAc : TPG = 80 : 20 [mass ratio]) was prepared. A resin solution was obtained by dissolving meta-type aramid (polymetaphenylene isophthalamide, TEIJIN LIMITED, Teijinconex) in the mixed solvent to a resin concentration of 4% by mass. Magnesium hydroxide particles (average primary particle diameter of 0.8 µm) were added to the resin solution in an amount that resulted in magnesium hydroxide particles : meta-type aramid = 70 : 30 [mass ratio], and the mixture was stirred and mixed to obtain a coating liquid (1).

A resin particle dispersion (1) (dispersion medium: water, solid content concentration of 7% by mass) was prepared. A dried product of the resin particle dispersion (1) was used as a sample, and the SEM observation, the DSC, and the NMR described above were performed to analyze the particle diameter of the resin particles, the Tg of the resin, and the composition of the resin. The results are shown in Table 2.

An appropriate amount of the coating liquid (1) was placed on a pair of Meyer bars, and a polyethylene microporous film (thickness of 9 µm, air permeability of 95 seconds/100 mL) was passed between the Meyer bars to apply equal amounts of the coating liquid (1) to both sides. This was immersed in a coagulation liquid (DMAc : TPG : water = 30 : 8 : 62 [mass ratio] and liquid temperature of 40°C) to solidify the coating layer, then washed in a water washing tank having a water temperature of 40°C and dried. Next, this was passed between a pair of bar coaters on which an appropriate amount of the resin particle dispersion (1) was placed, and the resin particle dispersion (1) was applied to both sides in equal amounts and dried. In this way, a separator in which a porous layer and an adhesive layer were formed on both sides of a polyethylene microporous film was obtained.

When the obtained separator was observed with a SEM, the porous layers had a large number of micropores therein, had a structure in which the micropores were connected to each other and were layers through which gas or liquid could pass from one side to the other side.

### - Production of Positive Electrode -

With a double-armed mixer, 89.5 parts by mass of lithium cobalt oxide powder as a positive electrode active material, 4.5 parts by mass of acetylene black as a conductive auxiliary agent, 6 parts by mass of polyvinylidene fluoride as a binder resin, and an appropriate amount of N-methyl-2-pyrrolidone were stirred and mixed to produce a positive electrode slurry. The positive electrode slurry was applied to both sides or one side of an aluminum foil having a thickness of 20 µm, dried and then pressed to obtain a positive electrode having a positive electrode active material layer on both sides or one side.

### - Production of Negative Electrode -

With a double-armed mixer, 300 parts by mass of artificial graphite as a negative electrode active material, 7.5 parts by mass of a water-soluble dispersion containing 40% by mass of a modified product of a styrene-butadiene copolymer as a binder resin, 3 parts by mass of carboxymethyl cellulose as a thickener, and an appropriate amount of water were stirred and mixed to produce a negative electrode slurry. The negative electrode slurry was applied to both sides or one side of a copper foil having a thickness of 10 µm, dried and then pressed to obtain a negative electrode having a negative electrode active material layer on both sides or one side.

### - Production of Battery for Evaluating Adhesive Strength -

Both the double-sided positive electrode and the double-sided negative electrode were cut into rectangles of 30 mm × 70 mm.

The separator was cut into rectangles of TD 35 mm × MD 75 mm.

A laminated material composed of three positive electrodes, three negative electrodes, and five separators was produced by stacking the positive electrodes and the negative electrodes alternately in such a manner that the separator was sandwiched between the positive electrode and the negative electrode. The laminated material was inserted into an aluminum laminated film pack, an electrolyte solution (1 mol/L LiPF₆-ethylene carbonate : ethyl methyl carbonate [mass ratio of 3:7]) was injected into the pack, and the electrolyte solution was impregnated into the laminated material. Next, the laminated material together with the pack was hot pressed using a hot press machine in the stacking direction (wet heat press), thereby bonding the electrodes and the separators. The conditions of the hot press were a press temperature of 60°C, a press pressure of 50 kPa, and press time of 17 hours. The test secondary battery thus obtained was subjected to the adhesive strength described above.

### - Production of Battery for Evaluating Heat Resistance

Both the single-sided positive electrode and the single-sided negative electrode were cut into rectangles of 14 mm × 20 mm.

The separator was cut into a rectangle of TD 20 mm × MD 26 mm.

A laminated material composed of one positive electrode, one negative electrode, and one separator was produced by stacking in such a manner that the positive electrode active material layer and the negative electrode active material layer were facing each other and that the separator was sandwiched between the positive electrode and the negative electrode. The laminated material was inserted into an aluminum laminated film pack, an electrolyte solution (1 mol/L LiPF₆-ethylene carbonate : ethyl methyl carbonate [mass ratio of 3:7]) was injected into the pack, and the electrolyte solution was impregnated into the laminated material. Next, the laminated material together with the pack was hot pressed using a hot press machine in the stacking direction (wet heat press), thereby bonding the electrodes and the separator. The conditions of the hot press were a press temperature of 60°C, a press pressure of 50 kPa, and press time of 17 hours. Test secondary batteries thus obtained were subjected to the evaluation of heat resistance described above.

### [Example 2]

A resin particle dispersion (2) (dispersion medium: water, solid content concentration of 7% by mass) was prepared. A dried product of the resin particle dispersion (2) was used as a sample, and the SEM observation, the DSC, and the NMR described above were performed to analyze the particle diameter of the resin particles, the Tg of the resin, and the composition of the resin. The results are shown in Table 2.

A separator was produced in the same manner as in Example 1 except that the resin particle dispersion (1) was changed to the resin particle dispersion (2). The basis weight of the adhesive layers is as shown in Table 2.

When the obtained separator was observed with a SEM, the porous layers had a large number of micropores therein, had a structure in which the micropores were connected to each other and were layers through which gas or liquid could pass from one side to the other side.

### [Comparative Example 1]

A resin particle dispersion (3) (dispersion medium: water, solid content concentration of 7% by mass) was prepared. A dried product of the resin particle dispersion (3) was used as a sample, and the SEM observation, the DSC, and the NMR described above were performed to analyze the particle diameter of the resin particles, the Tg of the resin, and the composition of the resin. The results are shown in Table 2.

A separator was produced in the same manner as in Example 1 except that the resin particle dispersion (1) was changed to the resin particle dispersion (3). The basis weight of the adhesive layers is as shown in Table 2.

### [Comparative Example 2]

A separator was produced in the same manner as in Example 1 except that the resin particle dispersion (1) was changed to a liquid butadiene-acrylonitrile copolymer (hereinafter referred to as liquid NBR). The basis weight of the adhesive layers is as shown in Table 2.

### [Comparative Example 3]

An attempt was made to produce a separator in the same manner as in Example 1 except that the resin particle dispersion (1) was changed to a mixture of the resin particle dispersion (1) and the liquid NBR. The mixing ratio was solid content of resin particle dispersion (1) : liquid NBR = 15 : 85 [mass ratio]. The resin particles of the resin particle dispersion (1) and the liquid NBR were separated, and the adhesive layers could not be formed. In this example, the glass transition temperature was not measured.

The particle diameter of the resin particles shown in Table 2 is the measured value of the resin particle dispersion (1). The types of the monomer units and the amounts of the monomer units shown in Table 2 are based on the measurement results of the resin particle dispersion (1) and the measurement results of the liquid NBR.

### [Example 3]

A separator was produced in the same manner as in Example 1 except that the magnesium hydroxide particles were changed to barium sulfate particles (average primary particle diameter of 0.03 µm). The composition of the porous layers and the basis weight of the adhesive layers are as shown in Table 1 and Table 2.

When the obtained separator was observed with a SEM, the porous layers had a large number of micropores therein, had a structure in which the micropores were connected to each other and were layers through which gas or liquid could pass from one side to the other side.

### [Comparative Example 4]

A separator was produced in the same manner as in Example 3 except that the resin particle dispersion (1) was changed to the resin particle dispersion (3). The composition of the porous layers and the basis weight of the adhesive layers are as shown in Table 1 and Table 2.

### [Example 4]

A separator was produced in the same manner as in Example 1 except that the meta-type aramid was changed to an acrylic type resin and that the magnesium hydroxide particles were changed to alumina particles (average primary particle diameter of 1.0 µm). The composition of the porous layers and the basis weight of the adhesive layers are as shown in Table 1 and Table 2.

When the obtained separator was observed with a SEM, the porous layers had a large number of micropores therein, had a structure in which the micropores were connected to each other and were layers through which gas or liquid could pass from one side to the other side.

### [Comparative Example 5]

A separator was produced in the same manner as in Example 4 except that the resin particle dispersion (1) was changed to the resin particle dispersion (3). The composition of the porous layers and the basis weight of the adhesive layers are as shown in Table 1 and Table 2.

### [Example 5]

A separator was produced in the same manner as in Example 1 except that the meta-type aramid was changed to an acrylic type resin and that the magnesium hydroxide particles were changed to boehmite particles (average primary particle diameter of 1.0 µm). The composition of the porous layers and the basis weight of the adhesive layers are as shown in Table 1 and Table 2.

When the obtained separator was observed with a SEM, the porous layers had a large number of micropores therein, had a structure in which the micropores were connected to each other and were layers through which gas or liquid could pass from one side to the other side.

The acrylic type resin used for forming the porous layers in Example 4, Comparative Example 5, and Example 5 is an n-butyl methacrylate/acrylonitrile copolymer.

The abbreviations in Table 1 and Table 2 have the following meanings.
PE: polyethylene
St: styrene
MMA: methyl methacrylate
BMA: n-butyl methacrylate
EHMA: 2-ethylhexyl methacrylate
· Bt: butadiene
· AN: acrylonitrile

### [Table 1]

**Table 1**

| | Porous Substrate | | Porous Layer | | | | |
|---|---|---|---|---|---|---|---|
| | Resin | Thickness | Thickness (total on both sides) | Binder Resin | Inorganic Particles | | |
| | Type | | | Type | Type | Average Primary Particle Diameter | Content |
| | - | µm | µm | - | - | µm | % by Mass |
| Example 1 | PE | 9 | 3 | Meta-type aramid | Mg(OH)₂ | 0.8 | 70 |
| Example 2 | PE | 9 | 3 | Meta-type aramid | Mg(OH)₂ | 0.8 | 70 |
| Comparative Example 1 | PE | 9 | 3 | Meta-type aramid | Mg(OH)₂ | 0.8 | 70 |
| Comparative Example 2 | PE | 9 | 3 | Meta-type aramid | Mg(OH)₂ | 0.8 | 70 |
| Comparative Example 3 | PE | 9 | 3 | Meta-type aramid | Mg(OH)₂ | 0.8 | 70 |
| Example 3 | PE | 9 | 7 | Meta-type aramid | BaSO₄ | 0.03 | 80 |
| Comparative Example 4 | PE | 9 | 7 | Meta-type aramid | BaSO₄ | 0.03 | 80 |
| Example 4 | PE | 9 | 5 | Acrylic type | Al₂O₃ | 1.0 | 95 |
| Comparative Example 5 | PE | 9 | 5 | Acrylic type | Al₂O₃ | 1.0 | 95 |
| Example 5 | PE | 9 | 4 | Acrylic type | Boehmite | 1.0 | 95 |

### [Table 2]

**Table 2**

| | Adhesive Layer | | | | | | | | | | |
|---|---|---|---|---|---|---|---|---|---|---|---|
| | Resin Particle Dispersion or Liquid Resin | Resin Particles | Resin | Phenyl Group-Containing Acrylic Type Resin | | | Butadiene-Acrylonitrile Type Resin | | Phenyl Group-Containing Acrylic Type Resin : Butadiene-Acrylonitrile Type Resin | Butadiene Content | Basis Weight Per One Side |
| | Type | Average Primary Particle Diameter | Tg | Monomer Type | | Styrene Type: Acrylic Type | Monomer Type | | | | |
| | - | µm | °C | - | | Molar Ratio | - | | Mass Ratio | Mol% | g/m² |
| Example 1 | (1) | 0.5 | 59.6 | St | MMA,BMA | 39:61 | Bt | AN | 87:13 | 3.8 | 0.35 |
| Example 2 | (2) | 0.5 | 93.5 | St | MMA,BMA | 40:60 | Bt | AN | 89:11 | 6.3 | 0.30 |
| Comparative Example 1 | (3) | 0.6 | 56.8 | St | MMA,BMA,EHMA | 29:71 | - | AN | 96:4 | 0 | 0.40 |
| Comparative Example 2 | Liquid NBR | - | -5.5 | - | | | Bt | AN | 0:100 | 65 | 0.35 |
| Comparative Example 3 | (1) + Liquid NBR | 0.5 | - | St | MMA,BMA | 39:61 | Bt | AN | 29:71 | 51 | - |
| Example 3 | (1) | 0.5 | 59.6 | St | MMA,BMA | 39:61 | Bt | AN | 87:13 | 3.8 | 0.45 |
| Comparative Example 4 | (3) | 0.6 | 56.8 | St | MMA,BMA,EHMA | 29:71 | - | AN | 96:4 | 0 | 0.35 |
| Example 4 | (1) | 0.5 | 59.6 | St | MMA,BMA | 39:61 | Bt | AN | 87:13 | 3.8 | 0.35 |
| Comparative Example 5 | (3) | 0.6 | 56.8 | St | MMA,BMA,EHMA | 29:71 | - | AN | 96:4 | 0 | 0.30 |
| Example 5 | (1) | 0.5 | 59.6 | St | MMA,BMA | 39:61 | Bt | AN | 87:13 | 3.8 | 0.35 |

### [Table 3]

**Table 3**

| | Separator | | | |
|---|---|---|---|---|
| | Thickness | Air Permeability | Adhesive Strength | Heat Resistance |
| | µm | second/100 mL | N | - |
| Example 1 | 13 | 104 | 14 | A |
| Example 2 | 13 | 233 | 10 | A |
| Comparative Example 1 | 13 | 262 | 5 | B |
| Comparative Example 2 | 13 | 12762 | 5 | C |
| Comparative Example 3 | - | | | |
| Example 3 | 17 | 132 | 12 | A |
| Comparative Example 4 | 17 | 135 | 5 | B |
| Example 4 | 15 | 121 | 11 | A |
| Comparative Example 5 | 15 | 102 | 5 | B |
| Example 5 | 14 | 99 | 14 | A |

All the documents, patent applications, and technical standards described in this description are incorporated in this description by reference to the same extent as if each of the documents, the patent applications, and the technical standards were specifically and individually indicated to be incorporated herein by reference.

The disclosure of Japanese Patent Application No. 2023-028672 filed on February 27, 2023 is incorporated in this description by reference in its entirety.

### Reference Signs List

101, 102, 103, 104, 105, 106, and 107 Separator
20 Porous substrate
30 Porous layer
40 Laminated body
50 Adhesive layer
52 Resin particle

## Claims

1. A separator for a non-aqueous secondary battery, comprising:
a porous layer containing inorganic particles and a binder resin; and
an adhesive layer containing a phenyl group-containing acrylic type resin and a butadiene-acrylonitrile type resin, wherein the amount of the butadiene unit in the total amount of the acrylic type unit, the styrene type unit, the butadiene unit, and the acrylonitrile unit contained in both resins is 3 mol% to 50 mol%.

2. The separator for a non-aqueous secondary battery according to claim 1, further comprising
a porous substrate,
wherein the porous layer is provided on one side or both sides of the porous substrate, and
the adhesive layer is provided on one side or both sides of a laminated body of the porous substrate and the porous layer.

3. The separator for a non-aqueous secondary battery according to claim 1,
wherein the adhesive layer contains resin particles, and
the resin particles contain at least one of a phenyl group-containing acrylic type resin and a butadiene-acrylonitrile type resin.

4. The separator for a non-aqueous secondary battery according to claim 3, wherein the average primary particle diameter of the entire resin particles contained in the adhesive layer is 0.1 µm to 1.0 µm.

5. The separator for a non-aqueous secondary battery according to claim 1, wherein the mass ratio of the phenyl group-containing acrylic type resin to the butadiene-acrylonitrile type resin contained in the adhesive layer is 60:40 to 95:5.

6. The separator for a non-aqueous secondary battery according to claim 1,
wherein the phenyl group-containing acrylic type resin has a styrene type unit and an acrylic type unit, and
the molar ratio of the styrene type unit to the acrylic type unit is 30:70 to 50:50.

7. The separator for a non-aqueous secondary battery according to claim 1, wherein the glass transition temperature of the entire resin contained in the adhesive layer is 58°C to 100°C.

8. The separator for a non-aqueous secondary battery according to claim 1, wherein the basis weight of the adhesive layer is 0.05 g/m² to 1.0 g/m² per one side of the separator for a non-aqueous secondary battery.

9. The separator for a non-aqueous secondary battery according to claim 1, wherein the average primary particle diameter of the entire inorganic particles contained in the porous layer is 0.01 µm to 1.0 µm.

10. The separator for a non-aqueous secondary battery according to claim 1, wherein the binder resin contains at least one selected from the group consisting of a polyamide type resin, an acrylic type resin, a fluorine type resin, and a styrene-butadiene type resin.

11. A non-aqueous secondary battery that obtains electromotive force by doping and dedoping of lithium ions, comprising:
a positive electrode;
a negative electrode; and
the separator for a non-aqueous secondary battery according to any one of claim 1 to claim 10 disposed between the positive electrode and the negative electrode.
